# EUROPÄISCHE PATENTANMELDUNG

(11) **EP 2 227 993 A1**
(43) Veröffentlichungstag der Anmeldung: **15.09.2010**
(21) Anmeldenummer: 10155892.2
(22) Anmeldetag: 09.03.2010
(51) Int. Cl.: A47J 31/36, A47J 31/54

(54) **Kaffeemaschine**

(30) Priorität: 12.03.2009 DE 102009012970
(71) Anmelder: WMF WÜRTTEMBERGISCHE METALLWARENFABRIK AG, 73309 Geislingen/Steige (DE)
(72) Erfinder: Kiefer, Alexander, 73329, Kuchen (DE); Göltenboth, Frank, 89134, Blaustein (DE)
(74) Vertreter: BRP Renaud & Partner

(57) **Zusammenfassung**

Die vorliegende Erfindung betrifft eine Kaffeemaschine mit einer an eine Wasserzuführung angeschlossenen Brüheinrichtung, die eine Kaffeemehl aufnehmende Brühkammer umfasst und mit einer Pumpe zum Zuführen des Brühwassers in die Brühkammer. Erfindungswesentlich ist dabei, dass eine Steuerungs-/Reglungseinrichtung vorgesehen ist, über welche während des Brühvorgangs ein auf das Kaffeemehl einwirkender Brühdruck einstellbar ist.

## Beschreibung

Die vorliegende Erfindung betrifft eine Kaffeemaschine mit einer an eine Wasserzuführung angeschlossenen Brüheinheit, gemäß dem Oberbegriff des Anspruchs 1.

Aus der EP 0 427 666 B1 ist eine gattungsgemäße Kaffeemaschine mit einer an eine Wasserleitung angeschlossenen Brüheinheit bekannt, die eine Kaffeemehl aufnehmende Brühkammer umfasst. Zusätzlich weist die Kaffeemaschine eine Pumpe zum Zuführen des Brühwassers in die Brühkammer auf. Ausgehend von der Erkenntnis, dass zur Zubereitung von Espresso einerseits und der Zubereitung von gewöhnlichem Kaffee andererseits sowohl die Durchflussmenge des erhitzten Wassers pro Zeiteinheit als auch unter Umständen die Temperatur des Wasser angepasst werden müssen, schlägt die EP 0 427 666 B1 vor, zwangsläufig einer bestimmten Aufbrühvorrichtung, bspw. einem Sieb oder einem Filter, eine bestimmte Betriebsart zuzuordnen, so dass mit derselben Kaffeemaschine unter Verwendung des gleichen Boilers und der gleichen Wasserfördereinrichtung, sowohl im drucklosen Verfahren Filterkaffee als auch im Druckverfahren Espresso hergestellt werden kann, ohne dass die Bedienperson irgendwelche betrieblichen Parameter der Maschine manuell umstellen müsste.

Aus der EP 1 902 653 A2 ist ebenfalls eine gattungsgemäße Kaffeemaschine bekannt, wobei die Leistung der Pumpe zum Bereiten eines Espresso ausgelegt ist. Darüber hinaus weist die gattungsgemäße Kaffeemaschine Einrichtungen oder Mittel zum Erfassen des bei einem Brühvorgang dem der Brühkammer zuzuführenden Heißwasser durch das in die Brühkammer befindliche Kaffeepulver entgegenwirkenden Gegendrucks auf. Die bekannte Kaffeemaschine ist demgemäß in der Lage, ein sich in der Brühkammer befindliches Kaffeepulver zu erkennen und in Abhängigkeit des beim Brühvorgang durch das Kaffeepulver bzw. dessen Mahlfeinheit initiierten Gegendrucks einen Rückschluss auf das zuzubereitende Kaffeegetränk zu ziehen und damit eine automatische Anpassung des aktuellen Brühzyklus an die zum Bereiten des gewünschten Kaffeegetränks gestellten Anforderungen anzupassen.

Die vorliegende Erfindung beschäftigt sich mit dem Problem, für eine gattungsgemäße Kaffeemaschine, eine verbesserte oder zumindest eine andere Ausführungsform anzugeben, mit welcher sich besonders wohlschmeckende Kaffeegetränke herstellen lassen.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einer an sich bekannten Kaffeemaschine mit einer an eine Wasserzuführung, z.B. aus dem Trinkwassernetz oder einem internen/externen Tank, angeschlossenen Brüheinrichtung und einer Pumpe zum Zuführen des Brühwassers in eine Brühkammer, eine Steuerungs-/Regelungseinrichtung vorzusehen, über welche während des eigentlichen Brühvorgangs ein auf das sich in einer Brühkammer befindliche Kaffeemehl einwirkender Brühdruck einstellbar, dass heißt insbesondere variierbar, ist. So ist es zur Herstellung von besonders schmackhaften Kaffeegetränken, wie bspw. eines Espressos, von Vorteil, wenn dieser während einer ersten Brühphase mit einem vergleichsweise hohen Brühdruck zubereitet wird, während sich daran eine zweite Brühphase mit einem vergleichsweise geringeren Brühdruck anschließt. Durch den in der ersten Brühphase vergleichsweise hohen Brühdruck kann eine qualitativ hochwertige Crema kredenzt werden, wobei das volle Kaffeearoma durch den sich in der zweiten Brühphase verringernden Brühdruck voll entfalten kann. Crema nennt man dabei den dichten, goldbraunen Schaum, der sich auf richtig zubereitetem Espresso bildet und üblicherweise aus Ölen, Proteinen und Zuckerarten besteht und einen Großteil des Espressoaromas bildet. Mit der erfindungsgemäßen Steuerungs-/Regelungseinrichtung ist es somit erstmals möglich, während des Brühvorgangs den Brühdruck zu variieren, insbesondere zu steuern oder zu regeln, und dadurch einen individuell angepassten Brühdruck zu erzeugen.

Bei einer vorteilhaften Weiterbildung der erfindungsgemäßen Lösung, steuert/regelt die Steuerungs-/Regelungseinrichtung während des Brühvorgangs eine Leistung der Pumpe. Da die Pumpe für die Zuführung des Wassers zur Brühkammer verantwortlich ist, kann über eine Steuerung bzw. Regelung der Pumpenleistung indirekt Einfluss auf den während des Brühvorgangs herrschenden Brühdruck genommen werden, so dass sich durch die Steuerung/Regelung der Pumpenleistung der Brühdruck besonders einfach variieren lässt.

Alternativ hierzu ist auch denkbar, dass die Pumpe mit einer stets gleichen Pumpenleistung betrieben wird, so dass in diesem Fall die Steuerung-/Regelungseinrichtung während des Brühvorgangs ein Bypassventil steuert bzw. regelt und dadurch Einfluss auf den in der Brühkammer herrschenden Brühdruck nimmt. Selbstverständlich kann die Steuerungs-/Regelungseinrichtung auch auf andere, den Brühdruck in der Brühkammer direkt oder indirekt beeinflussenden Komponenten der Kaffeemaschine Einfluss nehmen.

Bei einer weiteren vorteilhaften Ausführungsform der erfindungsgemäßen Lösung, ist die Steuerungs-/Regelungseinrichtung Kennfeld gesteuert, wobei vorzugsweise mehrere, getränkeabhängige Kennfelder zur Steuerung/Regelung des Brühdrucks während des Brühvorgangs vorhanden und insbesondere in der Steuerungs-/Regelungseinrichtung abgespeichert sind. Die jeweiligen Kennfelder können dabei insbesondere an das jeweils herzustellende Getränk, bspw. einen Kaffee oder einen Espresso, angepasst sein so dass durch die Wahl des jeweiligen Kaffeegetränks der Brühdruck in der Brühkammer während des Brühvorgangs bereits optimal an das jeweils gewünschte Kaffeegetränk angepasst wird. Die Kennfelder können dabei vorab experimentell festgelegt werden.

Bei einer weiteren vorteilhaften Ausführungsform der erfindungsgemäßen Lösung, ist eine mit der Steuerungs-/Regelungseinrichtung kommunizierend verbundene Durchflussüberwachungseinrichtung vorgesehen, die einen Durchfluss durch die Brüheinrichtung überwacht, wobei die Steuerungs-/Regelungseinrichtung den Brühdruck in Abhängigkeit des Durchflusses steuert/regelt. Hierdurch kann bspw. eine Sicherheitseinrichtung geschaffen werden, welche bei einem stark ansteigenden Brühdruck innerhalb der Brüheinrichtung, dass heißt innerhalb der Brühkammer, diesen versucht zu reduzieren, indem bspw. die Pumpenleistung von der Steuerungs-/Regelungseinrichtung reduziert wird. Denkbar ist selbstverständlich auch der umgekehrte Fall, so dass bei einem steigenden Brühdruck innerhalb der Brühkammer die Leistung der Pumpe erhöht wird, um bspw. ein Verstopfen nach Möglichkeit zu verhindern.

Zweckmäßig steuert/regelt die Steuerungs-/Regelungseinrichtung den Brühdruck in Abhängigkeit einer in einem Kennfeld hinterlegten Durchflusssollkurve. Denkbar ist somit auch, dass in Abhängigkeit des jeweils gewählten Kaffeegetränks damit korrespondierende Durchflusssollkurven in einem Kennfeld hinterlegt sind, so dass bspw. bei der Wahl eines Espressos der in der Brühkammer herrschende Brühdruck in Abhängigkeit dieser in dem Kennfeld hinterlegten Durchflusssollkurve geregelt bzw. gesteuert wird.

Mit der erfindungsgemäßen Kaffeemaschine ist es somit möglich, während des eigentlichen Brühvorgangs direkt oder indirekt Einfluss auf den in einer Brühkammer herrschenden Brühdruck zu nehmen und dadurch das jeweils herzustellende Kaffeegetränk, bspw. des Espressos, direkt zu beeinflussen.

## Patentansprüche

1. Kaffeemaschine mit
- einer an eine Wasserzuführung angeschlossenen Brüheinrichtung, die eine Kaffeemehl aufnehmende Brühkammer umfasst,
- einer Pumpe zum Zuführen des Brühwassers in die Brühkammer,
**dadurch gekennzeichnet,**
**dass** eine Steuerungs-/Reglungseinrichtung vorgesehen ist, über welche während des Brühvorgangs ein auf das Kaffeemehl einwirkender Brühdruck einstellbar ist.

2. Kaffeemaschine nach Anspruch 1,
**dadurch gekennzeichnet,**
**dass** die Steuerungs-/Regelungseinrichtung während des Brühvorgangs zumindest die Pumpe steuert/regelt.

3. Kaffeemaschine nach Anspruch 1 oder 2,
**dadurch gekennzeichnet,**
- **dass** die Steuerungs-/Regelungseinrichtung während des Brühvorgangs ein Bypassventil steuert/regelt, und/oder
- **dass** die Steuerungs-/Regelungseinrichtung während des Brühvorgangs ein stromaufwärts der Brühkammer liegendes Drosselorgan steuert/regelt.

4. Kaffeemaschine nach einem der Ansprüche 1 bis 3,
**dadurch gekennzeichnet,**
**dass** die Steuerungs-/Regelungseinrichtung Kennfeld gesteuert ist.

5. Kaffeemaschine nach Anspruch 4,
**dadurch gekennzeichnet,**
**dass** in der Steuerungs-/Regelungseinrichtung mehrere, getränkeabhängige Kennfelder zur Steuerung/Regelung des Brühdrucks während des Brühvorgangs gespeichert sind.

6. Kaffeemaschine nach einem der Ansprüche 1 bis 5,
**dadurch gekennzeichnet,**
**dass** die Steuerungs-/Regelungseinrichtung zur Erzeugung eines Espressos den Brühdruck in einer Brühphase höher hält als in einer anderen Brühphase.

7. Kaffeemaschine nach einem der Ansprüche 1 bis 6,
**dadurch gekennzeichnet,**
**dass** zumindest ein mit der Steuerungs-/Regelungseinrichtung kommunizierend verbundener Sensor vorgesehen ist, welcher wenigstens einen Brühparameter, bevorzugt den Durchfluss, überwacht, wobei die Steuerungs-/Regelungseinrichtung den Brühdruck in Abhängigkeit zumindest dieses Parameters steuert/regelt.

8. Kaffeemaschine nach einem der Ansprüche 1 bis 7,
**dadurch gekennzeichnet,**
**dass** eine mit der Steuerungs-/Regelungseinrichtung kommunizierend verbundene Durchflussüberwachungseinrichtung vorgesehen ist, welche einen Durchfluss durch die Brüheinrichtung überwacht, wobei die Steuerungs-/Regelungseinrichtung den Brühdruck in Abhängigkeit des Durchflusses steuert/regelt.

9. Kaffeemaschine nach Anspruch 8,
**dadurch gekennzeichnet,**
**dass** die Steuerungs-/Regelungseinrichtung den Brühdruck in Abhängigkeit einer in einem Kennfeld hinterlegten Durchflusssollkurve steuert/regelt.
